**Europäisches Patentamt**

**European Patent Office**

**Office européen des brevets**

(11) Veröffentlichungsnummer: **0 057 271**
**B1**

(12) **EUROPÄISCHE PATENTSCHRIFT**

(45) Veröffentlichungstag der Patentschrift:
**10.10.84**

(51) Int. Cl.³: **G 06 K 19/08**, G 06 K 7/14,
G 06 K 1/12

(21) Anmeldenummer: **81109503.3**

(22) Anmeldetag: **04.11.81**

(54) Verfahren zur Verhinderung erfolgreicher Fälschungen von Dokumenten und Anordnung zur Durchführung des Verfahrens.

(30) Priorität: **03.02.81 CH 720/81**
**16.04.81 CH 2559/81**
**23.09.81 CH 6126/81**

(43) Veröffentlichungstag der Anmeldung:
**11.08.82 Patentblatt 82/32**

(45) Bekanntmachung des Hinweises auf die Patenterteilung:
**10.10.84 Patentblatt 84/41**

(84) Benannte Vertragsstaaten:
**AT CH DE FR GB IT LI NL**

(56) Entgegenhaltungen:
**EP - A - 0 004 559**
**DE - A - 2 829 778**
**FR - A - 2 316 666**
**FR - A - 2 321 155**
**FR - A - 2 395 550**
**US - A - 3 620 590**
**US - A - 3 814 904**
**US - A - 4 094 462**
**US - A - 4 213 038**
**US - A - 4 218 674**

(73) Patentinhaber: **LGZ LANDIS & GYR ZUG AG,**
**CH-6301 Zug (CH)**

(72) Erfinder: **Baltes, Heinrich Peter, Zeughausgasse 21,**
**CH-6300 Zug (CH)**
Erfinder: **Glass, Andrew Stuart, Hofstrasse 43,**
**CH-6300 Zug (CH)**
Erfinder: **Jauch, Karl M., 4, av.due Lignon, CH-1219 Le**
**Lignon (CH)**

(74) Vertreter: **Müller, Hans–Jürgen, Dipl.-Ing., Müller,**
**Schupfner & Gauger**
**Lucile-Grahn-Strasse 38 Postfach 80 13 69,**
**D-8000 München 80 (DE)**

## Beschreibung

Die meisten der heute gebräuchlichen Dokumente, wie z. B. Banknoten, Kreditkarten, Identitätskarten, Fahrkarten, Schecks u. dgl., können mit modernen Reproduktionsverfahren mit nicht allzu großem Aufwand gefälscht werden. Es sind zahlreiche Vorschläge bekannt, die darauf abzielen, auf solchen Dokumenten Echtheitsmerkmale aufzuzeichnen, welche den für eine erfolgversprechende Fälschung erforderlichen Aufwand und damit die Fälschungssicherheit erhöhen. Eine verhältnismäßig hohe Fälschungssicherheit wird erreicht, wenn die Echtheitsmerkmale in Form räumlicher Strukturen, die einfallendes Licht in charakteristischer Weise beugen, in das Dokument eingegeben werden. Solche räumliche Strukturen, wie z. 'B. holographisch erzeugte Strukturen, Phasenbeugungsgitter und Kinoforms, sind nur mit hohem technischem Aufwand herstellbar. Aufgrund ihrer meßbaren Wirkung, die sie auf die räumliche Intensitätsverteilung des von ihnen abgestrahlten Streulichts ausüben, läßt sich in selbsttätig arbeitenden Prüfgeräten die Echtheit solcher Dokumente nachweisen.

Es ist ein Verfahren der im Oberbegriff des Anspruchs 1 angegebenen Art bekannt (DE-PS 25 38 875), bei dem auf das Dokument ein Phasenbeugungsgitter aufgezeichnet wird, das die von einer Lichtquelle ausgehende Energie in einem vorbestimmten Verhältnis in einzelne Beugungsordnungen lenkt. Bei der Echtheitsprüfung wird das Dokument als echt betrachtet, wenn die Energieanteile bestimmter Beugungsordnungen im erwarteten Verhältnis zueinander stehen.

Ferner ist es bekannt (DE-PS 2 814 890), zum Nachweis eines in ein Dokument eingegebenen Phasenbeugungsgitters die Intensität des in eine bestimmte Beugungsordnung abgelenkten Lichtbündels mit der Intensität des diffus gestreuten Lichts zu vergleichen.

Es ist auch bekannt, in Banknoten einen Sicherheitsfaden einzubetten, der die Form eines flachen Metall- oder Plastikbandes mit rechteckförmigem Querschnitt aufweist. Solche gut sichtbaren und auch leicht fühlbaren Sicherheitsfäden erlauben eine einfache und rasche Prüfung der Echtheit des Dokumentes. Das Einarbeiten des Sicherheitsfadens in die Papier- oder Plastikschicht erfordert hingegen einen aufwendigen, von einem Fälscher nur schwer beherrschbaren Arbeitsprozeß. Um die Fälschungssicherheit weiter zu erhöhen und einen maschinellen Nachweis des Vorhandenseins und der Echtheit des Sicherheitsfadens zu ermöglichen, ist es bekannt (DE-PS 2 205 428), mikroskopisch kleine Löcher in den Sicherheitsfaden einzugeben, die z. B. ein Codemuster darstellen, das mit Hilfe von Licht- oder Korpuskularstrahlen ausgelesen werden kann.

Der Erfindung liegt die Aufgabe zugrunde, ein Verfahren der eingangs genannten Art zu schaffen, nach welchem Fälschungen mit größerer Treffsicherheit von echten Dokumenten unterschieden werden können und das gestattet, eine Echtheitsinformation im Dokument zu verbergen, die nach dem erfindungsgemäßen Verfahren ohne weiteres, nach herkömmlichen Methoden der Echtheitsprüfung von Dokumenten jedoch kaum mehr ausgelesen werden kann.

Die Erfindung beruht auf der Erkenntnis, daß die genannte Aufgabe durch die Weiterbildung und praktische Anwendung wissenschaftlicher theoretischer Untersuchungsergebnisse lösbar ist, die auf dem dem Fachgebiet der Erfindung fernliegenden Gebiet inverser optischer Probleme gefunden wurden. Es ist nämlich bekanntgeworden (International U.R.S.I.-Symposium 1980 on Electromagnetic Waves, München, 26.—29. August 1980, Seiten 315C/1 bis 315C/2), daß bei einer teilkohärenten Quelle mit periodischem Phasenprofil, die durch Superposition eines Phasengitters und eines Zufallsstreuers realisiert werden kann, bezüglich der Anwesenheit des periodischen Objekts der Kohärenzgrad empfindlicher ist als die Intensität.

Das erfindungsgemäße Verfahren ist im Patentanspruch 1 und eine erfindungsgemäße Anordnung zur Durchführung dieses Verfahrens im Patentanspruch 27 beansprucht. Die in diesen Patentansprüchen zum Ausdruck gebrachte technische Lehre löst die oben genannte Aufgabe der Verhinderung oder zumindest erheblichen Erschwerung erfolgreicher Dokumentefälschungen unter Anwendung der genannten, auf fernliegenden Gebieten bekanntgewordenen theoretischen Untersuchungsergebnissen.

In Unteransprüchen sind weitere Ausbildungen der Erfindung beansprucht.

Nachfolgend werden einige Ausführungsbeispiele der Erfindung anhand der Zeichnung näher erläutert.

Es zeigen

Fig. 1, 2, 15 bis 19, 30, 32 und 33 verschiedene Dokumente im Schnitt,

Fig. 3, 7, 11, 12, 13, 20, 21, 28 und 29 verschiedene Anordnungen zur Prüfung der Echtheit von Dokumenten,

Fig. 4, 5, 8, 9, 26 und 27 Intensitäts-Diagramme,

Fig. 6, 10, 14 und 22 bis 25 Kohärenzgrad-Diagramme und

Fig. 31 und 34 je ein Sicherheitselement in perspektivischer Darstellung.

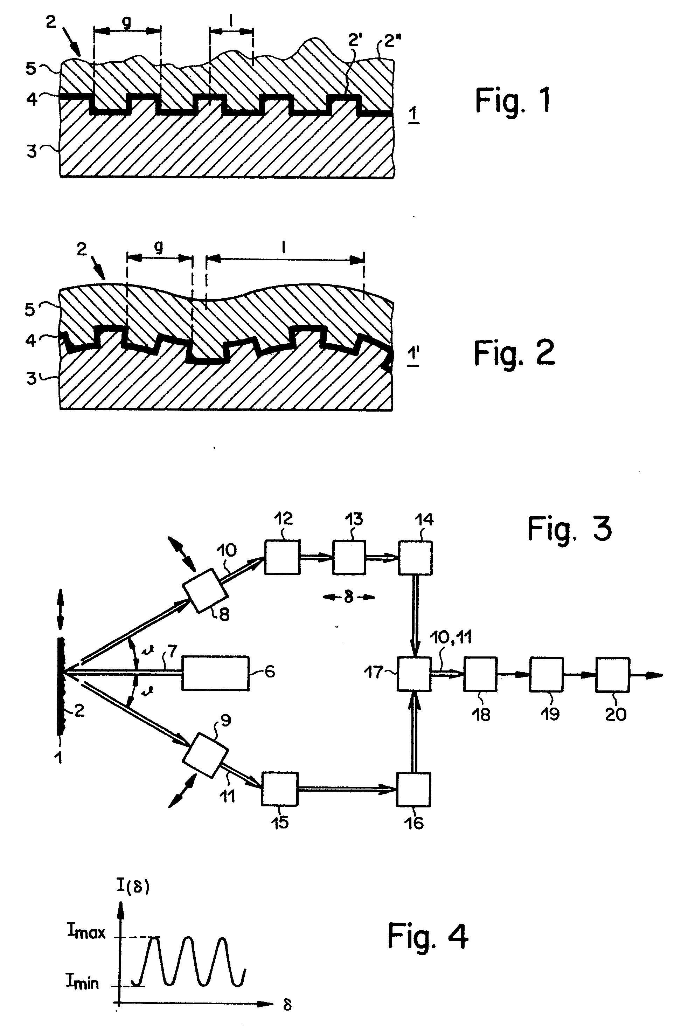

Das in Fig. 1 mit 1 bezeichnete Dokument kann eine Banknote, eine Kreditkarte, eine Identitätskarte, eine Fahrkarte, ein Scheck u. dgl. sein. Es besitzt ein oder mehrere Echtheitsmerkmale in Form einer räumlichen Struktur 2 mit einer deterministischen Komponente 2', die einfallendes Licht durch Beugung des transmittierten oder reflektierten Lichts in mindestens eine vorbestimmte Richtung ablenkt, z. B. ein Phasenhologramm, Phasenbeugungsgitter oder Kinoform sein kann und deren Echtheit in einem selbsttätig arbeitenden Prüfgerät aufgrund des an der Struktur 2 gestreuten Lichts geprüft werden kann. Im dargestellten Beispiel besteht die deterministische Komponente 2' aus einem Phasenbeugungsgitter, das in ein ebenes thermoplastisches Substrat 3 eingeprägt und mit einer dünnen Reflexionsschicht 4 beschichtet ist. Eine Schutzschicht 5, die im dargestellten Beispiel eine rauhe, diffus streuende Oberfläche aufweist, schützt das Phasenbeugungsgitter und die Reflexionsschicht 4 vor mechanischer Beschädigung. Die rauhe Oberfläche der Schutzschicht 5 bildet eine der deterministischen Komponente 2' überlagerte stochastische, diffus streuende Komponente 2" der Struktur 2. Vorteilhaft ist das Substrat 3 lichtundurchlässig und die Schutzschicht 5 nur für infrarotes Licht durchlässig, so daß zumindest die deterministische Komponente 2' der Struktur 2 dem menschlichen Auge verborgen ist.

Die typischen Abmessungen der deterministischen Komponente 2' — im Falle eines Phasenbeugungsgitters die Gitterkonstante — sind in der Fig. 1 mit g und die Korrelationslänge der stochastischen Komponente 2" mit l angedeutet. Die Korrelationslänge l ist, vereinfacht ausgedrückt, die mittlere Korngröße der Oberflächenrauhigkeit der stochastischen Komponente 2". Genauer ist l jene Länge, über die die stochastische Höhenausdehnung h(s) als Funktion der Längenausdehnung s gerade noch eine gewisse Erinnerung oder Korrelation aufweist, d. h., h(s) gerade noch mit h(s ± l) statistisch korreliert. Hier bedeutet h die Höhenausdehnung und s die Längenausdehnung der stochastischen Komponente 2".

Die Schutzschicht 5 kann z. B. auch aus einem Material mit räumlich fluktuierendem Brechungsindex bestehen und eine glatte Oberfläche aufweisen. In diesem Fall ist unter der Korrelationslänge l der stochastischen Komponente, grob gesagt, die mittlere »Korngröße« der Brechungsindexschwankungen zu verstehen.

Das Dokument 1' der Fig. 2 unterscheidet sich vom Dokument 1 dadurch, daß das Phasenbeugungsgitter auf einer nicht ebenen, die stochastische Komponente der Struktur 2 bildenden Oberfläche des Substrats 3 angeordnet ist.

In der Fig. 3 bedeutet 6 eine Lichtquelle, die einen Lichtstrahl 7 auf das Dokument 1 (bzw. 1') wirft. Der Lichtstrahl 7 soll zumindest quasimonochromatisch sein und eine gewisse räumliche Kohärenz aufweisen, d. h. die Kohärenzlänge unmittelbar vor der Struktur 2 soll mindestens gleich groß sein wie die typischen Abmessungen g der deterministischen Komponente 2'. Der Strahldurchmesser soll groß sein gegenüber den typischen Abmessungen g.

Das an der Struktur 2 gestreute Licht trifft auf zwei Winkelaussonderungsglieder 8, 9, von denen jedes ein enges Lichtbündel 10 bzw. 11 mit einem vorteilhaft veränderbaren mittleren Streuwinkel $\vartheta$ bzw. $\vartheta'$ durchläßt. Als Winkelaussonderungsglieder 8, 9 können z. B. bewegliche Blenden, Spiegel oder Prismen dienen. Sie arbeiten vorteilhaft synchron, so daß stets $\vartheta' = -\vartheta$ ist.

Das Lichtbündel 10 gelangt über ein Umlenkglied 12, ein Wegdifferenzglied 13 sowie ein Umlenkglied 14 und das Lichtbündel 11 über Umlenkglieder 15, 16 zu einem Überlagerungsglied 17, das die Lichtbündel 10, 11 wieder vereinigt. Das Wegdifferenzglied 13 erzeugt eine veränderbare optische Wegdifferenz $\delta$ der Lichtbündel 10, 11. Als Umlenkglieder 12, 14, 15 und 16 eignen sich z. B. Spiegel, Prismen, optische Fasern, elektrooptische Deflektoren usw., als Wegdifferenzglied 13 z. B. ein Prisma, bewegliche Spiegel, ein Medium mit variablem Brechungsindex usw. und als Überlagerungsglied 17 ein halbdurchlässiger Spiegel, eine faseroptische Verbindung usw.

Die vereinigten Lichtbündel 10, 11 fallen auf einen Lichtfühler 18, der z. B. eine Si-Diode, ein Photomultiplier usw. sein kann. Der Lichtfühler 18 ist mit einem elektronischen Signalverarbeitungsglied 19 verbunden, dem ein elektronisches Entscheidungsglied 20 nachgeschaltet ist.

Eine nicht gezeichnete Steuereinrichtung steuert den Ablauf der Echtheitsprüfung, indem sie die erforderlichen mechanischen bzw. elektrischen Verstellsignale, Aktivierungssignale und Stoppsignale an die Glieder 6, 8, 9, 13, 18, 19 und 20 abgibt. Sie kann auch eine nicht dargestellte Antriebseinrichtung steuern, welche durch Parallelverschiebung des Dokumentes 1 eine Mittelwertbildung der nachfolgend beschriebenen Messung ermöglicht.

Zur Erläuterung der Arbeitsweise wird vorerst angenommen, daß die räumliche Struktur 2 des Dokumentes ein symmetrisches Beugungsgitter ist und daß die Winkelaussonderungsglieder 8, 9 derart fest eingestellt sind, daß $\vartheta = \vartheta_1$ und $\vartheta' = \vartheta_{-1} = -\vartheta_1$ ist, wobei $\vartheta_1$ den Winkel der ersten Beugungsordnung und $\vartheta_{-1}$ den Winkel der minus ersten Beugungsordnung des Beugungsgitters bedeutet. Die Steuereinrichtung setzt die Lichtquelle 6 in Betrieb und auf der lichtempfindlichen Fläche des Lichtfühlers 18 erscheinen infolge der entstehenden Interferenzen der Lichtbündel 10, 11 Interferenzstreifen. Die Steuereinrichtung steuert nun das Wegdifferenzglied 13 derart, daß die Wegdifferenz $\delta$ kontinuierlich verändert wird. Dadurch variiert, wie aus der Fig. 4 ersichtlich ist, die Intensität $I = I(\delta)$ der Interferenzstreifen zwischen einem Maximalwert $I_{max}$ und einem Minimalwert $I_{min}$. Der Lichtfühler 18 erfaßt die Intensität $I = I(\delta)$ und das Signalverarbeitungsglied 19 mißt $I_{max}$ und $I_{min}$ und berechnet daraus den sogenannten Kontrast $|\mu|$ der Interferenzstreifen nach der Beziehung

$$|\mu| = (I_{max} - I_{min})/(I_{max} + I_{min}).$$

Der Meßwert des Kontrastes $|\mu|$ ist eine vom Kohärenzgrad der beiden Lichtbündel 10, 11 abhängige Größe und wird dem Entscheidungsglied 20 als Meßgröße zur Bildung eines Ja-Signals bzw. Nein-Signals zugeführt. Das Entscheidungsglied 20 betrachtet das Dokument 1 als echt und erzeugt ein Ja-Signal, wenn der Meßwert des Kontrastes $|\mu|$ z. B. einen vorgegebenen Schwellenwert überschreitet.

Allgemein ist der Kontrast eine Funktion der Streuwinkel $\vartheta$, $\vartheta'$, d. h.

$$|\mu| = |\mu(\vartheta, \vartheta')|.$$

Also ist es vorteilhaft, die Winkel $\vartheta$ und $\vartheta'$ betriebsmäßig zu variieren, den Kontrast $|\mu|$ in Funktion der Winkel $\vartheta$ und $\vartheta'$ zu messen und die Meßwerte im Entscheidungsglied 20 mit einer gespeicherten Schwellwertfunktion zu vergleichen. Auf diese Weise wird z. B. ein Dokument mit einem Phasenbeugungsgitter nur dann als echt anerkannt, wenn der Kohärenzgrad in mehreren Beugungsordnungen jeweils innerhalb vorgegebener Grenzwerte liegt.

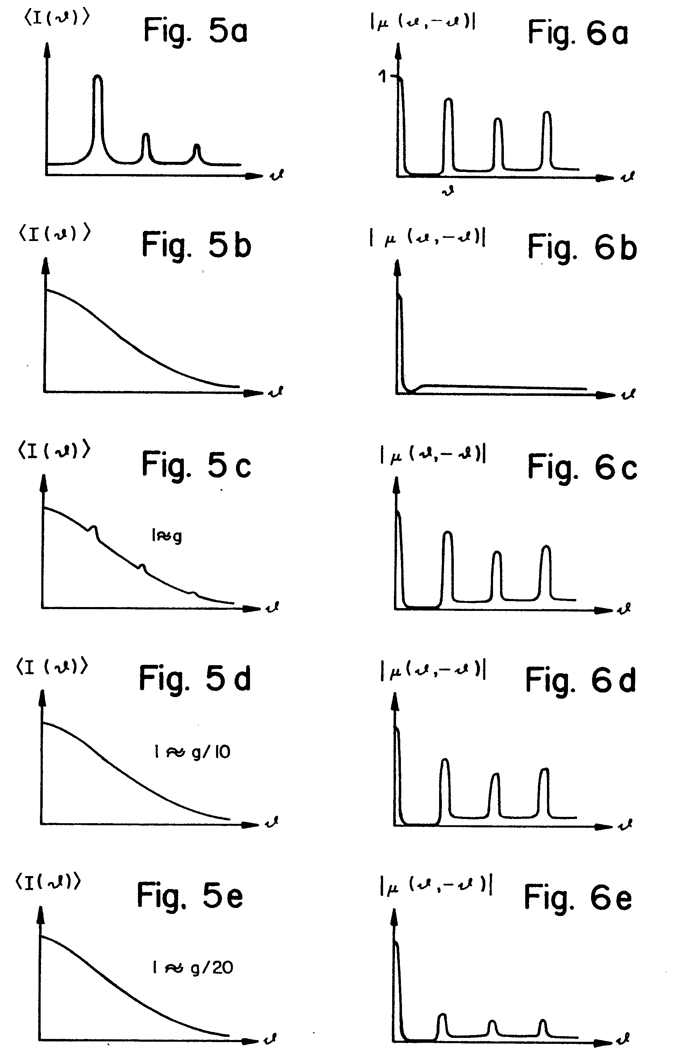

Die Diagramme der Fig. 5 zeigen die an verschiedenen räumlichen Strukturen nach der bekannten Intensitätsmeßmethode gemessene Winkelintensität $<I(\vartheta)>$ der Streustrahlung, wobei die Klammern $<...>$ den Mittelwert bezeichnen. Der nach dem beschriebenen Kohärenzgradmeßverfahren ermittelte Kontrast $|\mu(\vartheta, -\vartheta)|$ geht aus den Diagrammen der Fig. 6 hervor. Die Diagramme gelten für folgende Strukturen:

Fig. 5a und 6a reines Phasenbeugungsgitter mit der Gitterkonstante g,

Fig. 5b und 6b reiner diffuser Streuer mit der Korrelationslänge l,

Fig. 5c und 6c Superposition eines Phasenbeugungsgitters und eines diffusen Streuers mit $l \approx g$,

Fig. 5d und 6d Superposition eines Phasenbeugungsgitters und eines diffusen Streuers mit $l \approx g/10$ und

Fig. 5e und 6e Superposition eines Phasenbeugungsgitters und eines diffusen Streuers mit $l \approx g/20$.

Es ist leicht ersichtlich, daß das beschriebene Kohärenzgradmeßverfahren auch dann noch eine sehr zuverlässige Echtheitsprüfung ermöglicht, wenn das Echtheitsmerkmal durch eine stochastische Komponente stark gestört ist und eine Echtheitsprüfung durch Messung der Intensitätsverteilung erschwert ist und sogar versagt. Das Kohärenzgradmeßverfahren gestattet also die Erkennung von Echtheitsmerkmalen in Form von Phasenbeugungsgittern, Hologrammen usw., die z. B. auf einem rauhen Untergrund angeordnet oder durch Abrieb gestört sind.

Die Fälschungssicherheit kann weiter gesteigert werden, wenn der deterministischen Komponente 2' der Struktur 2 z. gemäß den Fig. 1 und 2 absichtlich eine stochastische, diffus streuende Komponente 2″ überlagert wird, welche die Erkennung des Echtheitsmerkmals durch Intensitätsmessungen erschwert oder gar verunmöglicht, jedoch die Erkennung durch Messung des Kohärenzgrades noch erlaubt. Dies ist gewährleistet, wenn die Korrelationslänge l der stochastischen Komponente 2″ höchstens $1/5$ der typischen Abmessungen g der deterministischen Komponenten 2' beträgt.

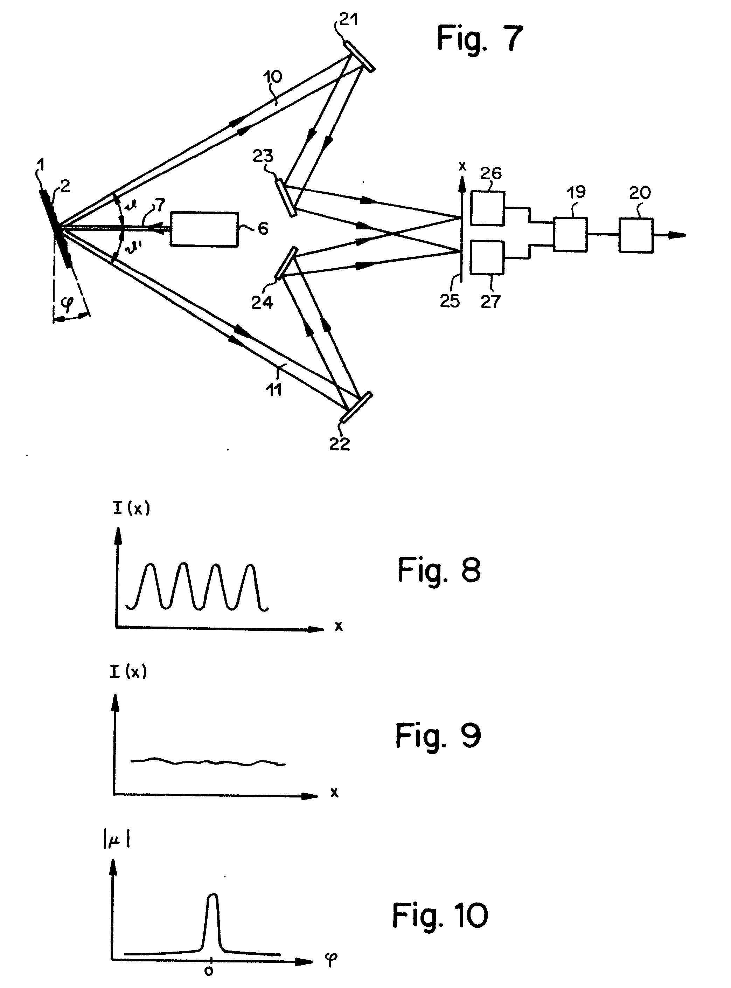

Die Fig. 7 zeigt eine spezielle, besonders einfache Anordnung zur interferometrischen Messung des Kohärenzgrades. Gleiche Bezugszeichen wie in der Fig. 3 weisen auf gleiche Teile hin. Die Lichtbündel 10, 11 werden mittels zweier Spiegel 21, 22 ausgesondert und mittels zweier weiterer Spiegel 23, 24 auf eine gemeinsame Detektorebene 25 gelenkt. Die Winkel $\vartheta$ und $\vartheta'$ sind fest eingestellt auf $\vartheta = \vartheta_1$ und $\vartheta' = -\vartheta_1$. Das Dokument 1 liegt auf einer nicht gezeichneten schwenkbaren Halterung, die gestattet, den Winkel $\varphi$ zwischen der Oberfläche des Dokumentes 1 und der Senkrechten zur Achse des Lichtstrahls 7 zu variieren. In der Detektorebene 25 sind zwei an das Signalverarbeitungsglied 19 angeschlossene Lichtfühler 26, 27 so angeordnet, daß der eine Lichtfühler ein Hellfeld und der andere Lichtfühler ein Dunkelfeld der erscheinenden Interferenzstreifen erfaßt. Das Signalverarbeitungsglied 19 ermittelt z. B. die Differenz der von den Lichtfühlern 26, 27 gemessenen Intensitätswerte.

Der Winkel $\varphi$ wird variiert. Der Winkel $\varphi=0$ entspricht senkrechtem Einfall des Lichtstrahls 7 und führt, wie aus den Fig. 8 und 10 ersichtlich ist, zu maximalem Kontrast $|\mu|$ der Interferenzstreifen, falls in der Struktur 2 ein Gitter enthalten ist. Bei $\varphi \neq 0$ hingegen tritt kein Kontrast auf (Fig. 9). Das Entscheidungsglied 20 gibt ein Ja-Signal ab, wenn der Kontrast $|\mu|$ einen vorgegebenen Schwellenwert überschreitet. Die Sicherheit der Echtheitsprüfung kann noch erhöht werden, wenn das Ja-Signal nur erzeugt wird, falls auch die Änderung des Kontrastes beim Schwenken des Dokumentes 1 einen vorgegebenen Wert überschreitet.

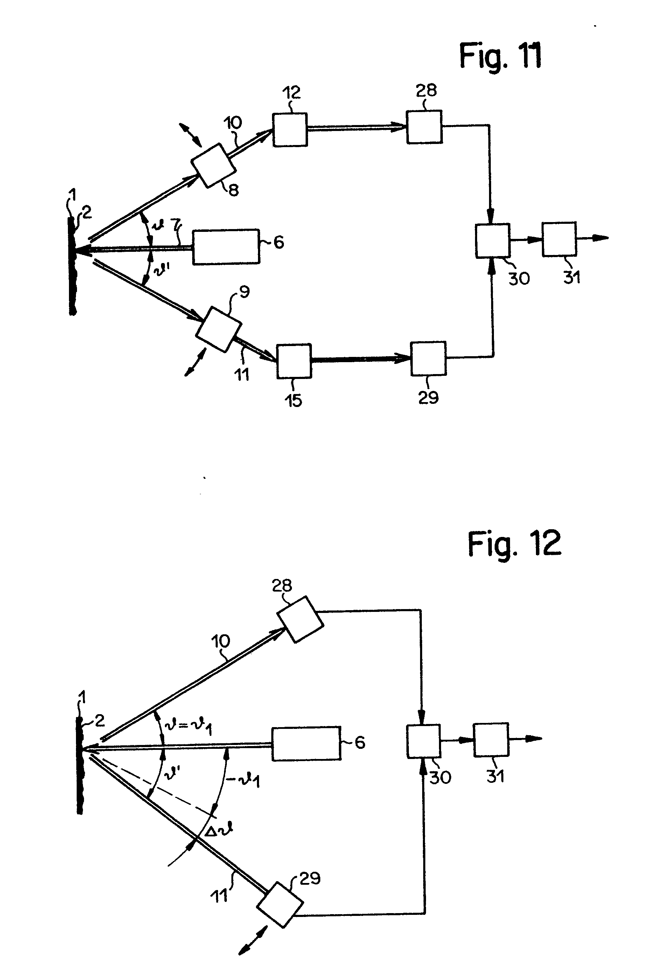

Anstelle des Interferenzstreifenkontrastes $|\mu|$ kann auch die sogenannte Intensitätskorrelation zweiter Ordnung $g^{(2)}$ gemessen werden. Dies wird anhand der Fig. 11 und 12 näher erläutert. Die Anordnung nach der Fig. 11 entspricht in den Teilen 6, 8, 9, 12 und 15 der Anordnung nach der Fig. 3. Das vom Umlenkglied 12 bzw. 15 umgelenkten Lichtbündel 10 bzw. 11 fällt auf einen Lichtfühler 28 bzw. 29. Die beiden Lichtfühler 28, 29 sind an ein Signalverarbeitungsglied 30 angeschlossen, dem ein Entscheidungsglied 31 nachgeschaltet ist.

Bei der Echtheitsprüfung des Dokumentes 1 werden die Winkel $\vartheta$ und $\vartheta'$ kontinuierlich variiert. Das Signalverarbeitungsglied 30 arbeitet als elektronischer Korrelator und ermittelt die Intensitätskorrelation $g^{(2)}(\vartheta, \vartheta')$ nach der Beziehung

$$g^{(2)}(\vartheta, \vartheta') = \frac{<I(\vartheta) \, ^{u} \, I(\vartheta')>}{<I(\vartheta)> \cdot <I(\vartheta')>}.$$

Bei hinreichend großem Bündelquerschnitt der Lichtbündel 10, 11 sind die beiden Größen $|\mu|$ und $g^{(2)}$ verknüpft durch die bekannte Beziehung $g^{(2)} = 1 + |\mu|^2$. Am Ausgang des Entscheidungsgliedes 31 erscheint ein Ja-Signal, wenn die Intensitätskorrelation $g^{(2)}$ einen vorgegebenen Schwellenwert überschreitet.

Die Fig. 12 stellt eine spezielle, besonders einfache Anordnung zur Messung der Intensitätskorrelation dar. Die Lichtfühler 28, 29 dienen zugleich als Winkelaussonderungsglieder und Detektoren. Der Winkel $\vartheta$ ist auf den Wert $\vartheta = \vartheta_1$ der ersten Beugungsordnung fest eingestellt. Der Lichtfühler 29 ist beweglich angeordnet, so daß der Winkel $\vartheta' = -\vartheta_1 \pm \Delta\vartheta$ um den Betrag $\Delta\vartheta$ variiert werden kann. Die Intensitätskorrelation $g^{(2)}$ ist maximal bei $\Delta\vartheta = 0$.

Bei den Anordnungen nach den Fig. 11 und 12 kann anstelle der Lichtfühler 28, 29 ein einziger Lichtfühler eingesetzt werden. Hierbei wird z. B. zuerst die Funktion $I(\vartheta)$ gemessen und die Meßwerte werden analog oder digital gespeichert, danach wird die Funktion $I(\vartheta')$ ermittelt und $g^{(2)}$ berechnet. Mittels eines Photomultipliers als Lichtfühler und eines elektronischen Zählers als Speicher ist dies mit geringem technischem Aufwand durchführbar. Solche Korrelationsmeßmethoden sind an sich z. B. aus dem Buch »Photon Correlation and Light Beating Spectroscopy«, 1974 Plenum Press, New York, bekannt und werden daher hier nicht näher erläutert.

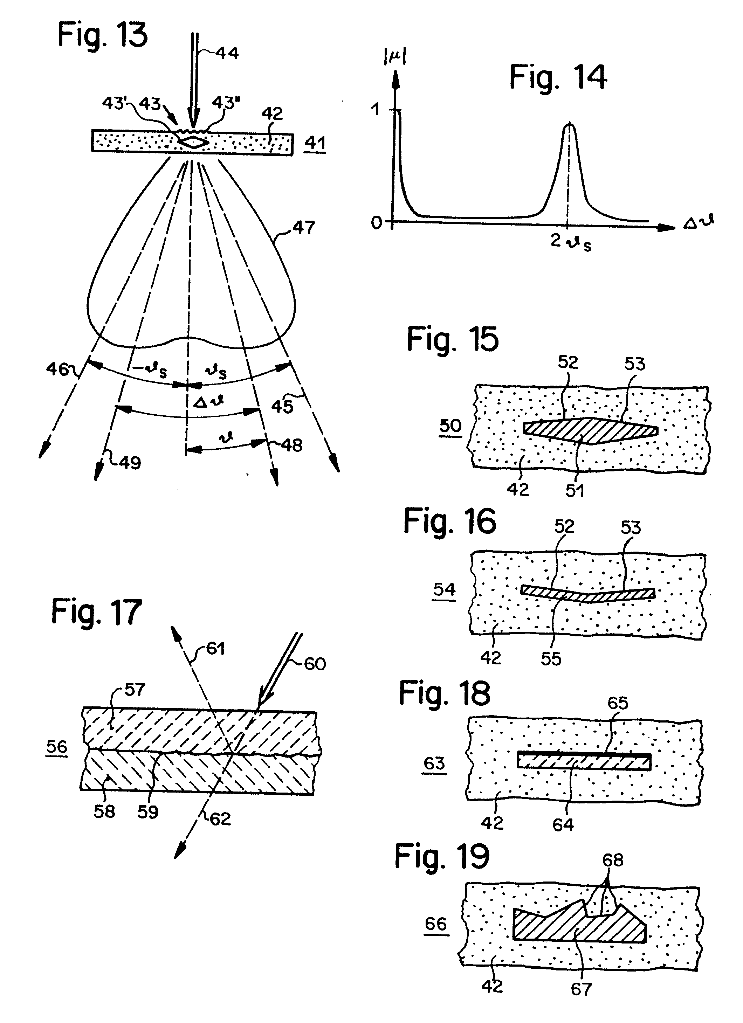

Anhand der Fig. 13 bis 19 wird im folgenden ein Verfahren erläutert, das mit den üblichen Herstellungsmethoden für Dokumente besser kompatibel ist als das Einbetten mikroskopisch feiner lichtbeugender Strukturen und dennoch eine hohe Fälschungssicherheit gewährleistet, wobei die Echtheitsmerkmale dem menschlichen Auge verborgen bleiben.

In der Fig. 13 bedeutet 41 ein Dokument, das eine Banknote, eine Kreditkarte, eine Identitätskarte, eine Fahrkarte, ein Scheck u. dgl. sein kann. Ein Träger 42 des Dokumentes 41 besteht z. B. aus Kunststoff, Papier oder Karton. In den Träger 42 ist ein Echtheitsmerkmal in Form einer räumlichen Struktur 43 eingegeben, die aus einem makroskopischen (deterministischen) optischen Element 43' und einem Streuelement 43″ gebildet ist. Das makroskopische optische Element 43' ist derart beschaffen, daß es einen auf das Dokument 41 einfallenden Lichtstrahl 44, der eine gewisse räumliche Kohärenz aufweist, nach den Gesetzen der geometrischen Optik durch Brechung oder Reflexion (im gezeichneten Beispiel durch Brechung) in mindestens zwei vorbestimmte Richtungen 45, 46 lenkt. Das dem makroskopischen optischen Element 43' wirkungsmäßig überlagerte (stochastische) Streuelement 43″ bewirkt eine diffuse Streuung des Lichtstrahls 44 derart, daß ein Nachweis des makroskopischen optischen Elementes 43' anhand des Intensitätsmusters 47 des gestreuten Lichtes zumindest erheblich erschwert, wenn nicht sogar verunmöglicht wird, das gestreute Licht in den vorbestimmten Richtungen 45, 46 aber noch gegenseitig kohärent ist. Das Streuelement 43″ kann durch das Material und/oder die Oberflächenstruktur des Trägers 42 oder des optischen Elementes 43' gebildet sein.

Der Streuwinkel eines beliebigen Teilstrahls 48 des an der Struktur 43 gestreuten Lichtes ist in der Fig. 13 mit $\vartheta$, der Winkel zwischem dem Teilstrahl 48 und einem bei senkrechtem Lichteinfall zu diesem symmetrischen Teilstrahl 49 mit $\Delta\vartheta$ und der Streuwinkel eines in die vorbestimmte Richtung 45 bzw. 46 gestreuten Teilstrahls mit $\vartheta_s$ bzw. $-\vartheta_s$ bezeichnet.

Zur Echtheitsprüfung des Dokumentes 41 in einem selbsttätig arbeitenden Prüfgerät wird mittels einer Lichtquelle der Lichtstrahl 44 erzeugt und auf die Struktur 43 geworfen. Aus dem an der Struktur 43 gestreuten Licht werden in den beiden vorbestimmten Richtungen 45, 46 je ein enger Lichtstrahl ausgesondert. Mittels mindestens eines Lichtfühlers und eines elektronischen Signalverarbeitungsgliedes wird aus den beiden Lichtbündeln eine von ihrem gegenseitigen Kohärenzgrad abhängige Meßgröße ermittelt. Aus dieser Meßgröße wird mittels eines Entscheidungsgliedes ein Ja-Signal bzw. ein Nein-Signal gebildet. Hierbei wird das Dokument 41 als echt betrachtet, wenn der Kohärenzgrad, d. h. der Kontrast $|\mu|$ oder die Intensitätskorrelation $g^{(2)}$, einen vorgegebenen Schwellenwert überschreitet. Zur Kohärenzgradmessung können die Anordnungen nach den Fig. 3, 7, 11 und 12 dienen.

In der Fig. 14 ist die Abhängigkeit des Kontrastes $|\mu|$ vom Winkel $\Delta\vartheta$ dargestellt. Es ist ersichtlich, daß der Kontrast $|\mu|$ bei $\Delta\vartheta = 2\vartheta_s$ ein ausgeprägtes Maximum aufweist. Aufgrund dieses Maximums kann also durch die Kohärenzgradmessung mit großer Sicherheit nachgewiesen werden, daß im Dokument 41 ein makroskopisches optisches Element 43' vorhanden ist. Infolge der diffusen Streuung einfallenden Lichtes durch das Streuelement 43″ der Struktur 43 bleiben die Echtheitsmerkmale der Struktur 43 dem menschlichen Auge verborgen.

Das Lichtmuster des an der Struktur 43 gestreuten Lichtes weist in der Regel eine Granulation (speckle) auf, welche die Kohärenzgradmessung erschwert, falls die Granulation statisch ist. Diese Schwierigkeit kann jedoch umgangen werden, indem das Dokument 41 bei der Kohärenzgradmessung z. B. kontinuierlich bewegt und dadurch der Mittelwert über das erscheinende Lichtmuster gebildet wird. Vorteilhaft wird das Dokument 41 parallel zur Längsachse des optischen Elementes 43' bewegt.

Als makroskopisches optisches Element 43' eignen sich vorteilhaft Strahlenteiler wie Biprismen, teildurchlässige Spiegel, reflektierende Körper mit geneigten Teilflächen u. dgl., die in ein Medium aus diffus streuendem Material oder mit diffus streuender Oberflächenstruktur eingebettet werden. Dies wird im folgenden anhand der Fig. 15 bis 19 noch näher erläutert.

Die Fig. 15 zeigt ein Dokument 50, in dessen Träger 42 ein Band 51 eingebettet ist. Die obere und die untere Oberfläche des Bandes 51 bestehen aus je zwei Teilflächen 52, 53, die zueinander in einem flachen Winkel geneigt sind. Die typische Breite des Bandes 51 liegt in der Größenordnung von einem

5

Millimeter, die Länge des Bandes kann der Länge oder Breite des Dokumentes 50 entsprechen. Das Band 51 besteht vorteilhaft aus Metall, aus einem metallbeschichteten Material oder aus einem transparenten Material. Der Träger 42 kann z. B. aus diffus streuendem Papier oder aus thermoplastischem Material mit diffus streuender Oberfläche bestehen.

In der Fig. 16 ist ein Dokument 54 mit einem in dessen Träger 42 eingebetteten Band 55 mit reflektierender Oberfläche dargestellt. Das Band 55 besaß ursprünglich einen rechteckförmigen Querschnitt, wurde jedoch um die in Längsrichtung verlaufende Mittellinie leicht geknickt, so daß wiederum Teilflächen 52, 53 entstanden, die einen flachen Winkel einschließen.

Der Träger des Dokumentes 56 nach der Fig. 17 besteht aus zwei miteinander verbundenen Schichten 57, 58 aus transparentem Kunststoff. Die äußeren Oberflächen der Schichten 57, 58 sind strukturlos glatt. Die gemeinsame Trennfläche 59 der Schichten 57, 58 ist jedoch diffus streuend strukturiert. Sie bildet einerseits einen Strahlenteiler, der einen schräg einfallenden Lichtstrahl 60 in einen in der Reflexionsrichtung 61 und in einen in der Transmissionsrichtung 62 liegenden Teilstrahl aufspaltet. Andererseits bildet die rauhe Trennfläche 59 ein Streuelement, das den Lichtstrahl 60 diffus streut. Bei der Echtheitsprüfung werden aus dem am Dokument 56 gestreuten Licht in der Reflexionsrichtung 61 und in der Transmissionsrichtung 62 je ein enges Lichtbündel ausgesondert und ihr Kohärenzgrad gemessen.

Die Fig. 18 zeigt ein Dokument 63, in dessen Träger 42 ein transparentes Band 64 eingebettet ist, dessen Querschnitt rechteckförmig ist und dessen eine Oberfläche mit einer dünnen, teildurchlässigen Reflexionsschicht 65 beschichtet ist. Diese Reflexionsschicht 65 bildet als Strahlenteiler das makroskopische optische Element. Als Streuelement kann wiederum das Material oder die Oberflächenstruktur des Trägers 42 dienen. Die Echtheitsprüfung erfolgt auf gleiche Weise wie beim Dokument 56.

Schließlich ist in der Fig. 19 ein Dokument 66 mit einem in den Träger 42 eingebetteten Körper 67 dargestellt, der eine Vielzahl individuell geneigter Teilflächen 68 aufweist. Diese Teilflächen 68 teilen einfallendes Licht durch Reflexion oder Brechung in eine Vielzahl von Teilstrahlern, während der Träger 42 das einfallende Licht diffus streut. Das gestreute Licht ist also hier in vielen vorbestimmten Richtungen gegenseitig kohärent. Vorteilhaft werden diese vorbestimmten Richtungen in einem Codemuster angeordnet. Bei der Echtheitsprüfung werden eine Vielzahl enger Lichtbündel ausgesondert und der Code durch Kohärenzgradmessungen ausgelesen.

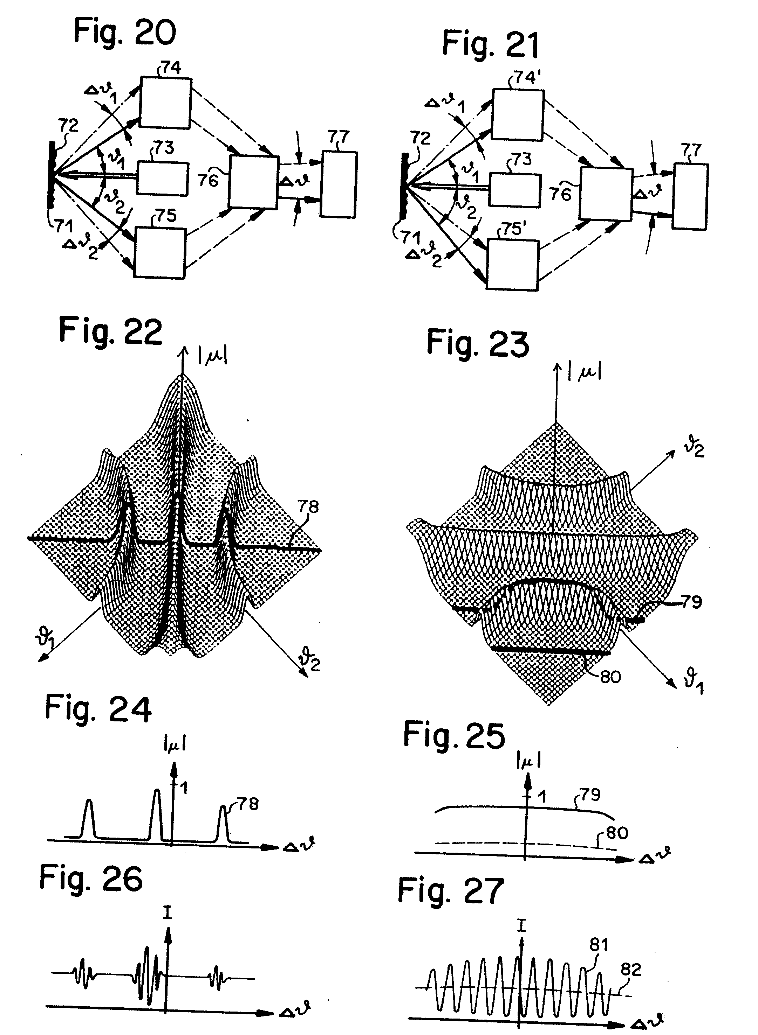

In den Fig. 20 und 21 bedeutet 71 ein Dokument mit einer räumlichen Struktur 72 der anhand der Fig. 1, 2 und 15 bis 19 beschriebenen Art. Zur Beleuchtung der Struktur 72 dient eine Lichtquelle 73, die zumindest quasimonochromatisch ist und eine gewisse räumliche Kohärenz aufweist. Zwei enge Bündel des an der Struktur 72 gestreuten Lichts treffen auf Winkelaussonderungsglieder 74, 75 bzw. 74', 75', welche ein oder mehrere Umlenkelemente und eine Vorrichtung zur Erzeugung einer variablen optischen Wegdifferenz enthalten können. Der mittlere Streuwinkel der beiden ausgesonderten Lichtbündel ist mit $\vartheta_1$ bzw. $\vartheta_2$ bezeichnet. In einem Überlagerungsglied 76 werden die beiden ausgesonderten Lichtbündel vereinigt. Ein Detektorsystem 77 empfängt die vereinigten Lichtstrahlen, bildet daraus elektrische Signale, verarbeitet diese, trifft eine Ja/Nein-Entscheidung und registriert die Ergebnisse. Die verschiedenen Baugruppen 73 bis 77 können fest oder beweglich auf einer nicht gezeichneten Grundplatte montiert sein.

Die beiden Anordnungen nach den Fig. 20 und 21 unterscheiden sich durch die Gesamtzahl der Bildumkehrungen (z. B. Spiegelungen), welche die beiden Lichtbündel in den Winkelaussonderungsgliedern 74 und 75 bzw. 74' und 75' sowie im Überlagerungsglied 76 auf ihrem Weg von der Struktur 72 bis zu ihrer Vereinigung erfahren. Bei der Anordnung nach der Fig. 20 ist die Anzahl Bildumkehrungen ungerade und bei der Anordnung nach der Fig. 21 ist diese Anzahl gerade.

Die Art der Überlagerung der ausgesonderten Lichtbündel ist durch die Anzahl Bildumkehrungen bestimmt. Ist diese Anzahl ungerade, so ist die Überlagerung invers. Ist die Anzahl gerade, so ist die Überlagerung normal. Die inverse Überlagerung entspricht der symmetrischen Abtastung der Kohärenz und die normale Überlagerung entspricht der antisymmetrische Abtastung.

Die geometrischen Eigenschaften der beschriebenen Anordnungen bedingen, daß eine geringe Abweichung des Strahls von der mittleren Streurichtung eine entsprechende Abweichung des empfangenen Strahls verursacht. Umgekehrt entspricht eine Winkelabweichung $\Delta\vartheta$ am Detektorsystem 77 einer Winkelabweichung $\Delta\vartheta_1$ bzw. $\Delta\vartheta_2$ des ausgesonderten Lichtbündels. Die inverse Überlagerung zeichnet sich dadurch aus, daß die Winkelabweichungen $\Delta\vartheta_1$ und $\Delta\vartheta_2$ verschiedene Vorzeichen aufweisen (Fig. 20). Bei der normalen Überlagerung sind die Vorzeichen der Winkelabweichungen $\Delta\vartheta_1$ und $\Delta\vartheta_2$ stets gleich (Fig. 21). Anhand einer Übersicht soll dieser Sachverhalt noch verdeutlicht werden:

Inverse Überlagerung (Fig. 20)
    Anzahl Bildumkehrungen ungerade
    Entspricht der symmetrischen Abtastung
    Vorzeichen von $\Delta\vartheta_1$ und $\Delta\vartheta_2$ verschieden

# 0 057 271

Normale Überlagerung (Fig. 21)
   Anzahl Bildumkehrungen gerade
   Entspricht der antisymmetrischen Abtastung
   Vorzeichen von $\Delta\vartheta_1$ und $\Delta\vartheta_2$ gleich

Der Kontrast $|\mu|$ der auf der Detektorebene des Detektorsystems 77 erscheinenden Interferenzstreifen hängt von den mittleren Streuwinkeln $\vartheta_1$ und $\vartheta_2$ sowie von Winkelabweichungen $\Delta\vartheta$ ab. Die Fig. 22 und 23 zeigen in perspektivischer Darstellung die mittels eines Computers berechnet Funktion $|\mu| = f(\vartheta_1, \vartheta_2)$ für den Fall, daß die räumliche Struktur 72 ein makroskopischer, auf den Gesetzen der geometrischen Optik beruhender Strahlenteiler ist. In den Fig. 24 und 25 ist die Abhängigkeit des Kontraktes $|\mu|$ von der Winkelabweichung $\Delta\vartheta$ bei fest eingestellten mittleren Streuwinkeln $\vartheta_1$ und $\vartheta_2$ dargestellt.

Die in den Fig. 22 und 24 mit 78 bezeichnete Kurve entspricht der symmetrischen Abtastung, die sich durch eine Reihe von isolierten Maxima auszeichnet.

Bei der antisymmetrischen Abtastung ergeben sich gemäß den Fig. 23 und 25 Kurven 79, 80, die über einen weiten Winkelbereich einen einigermaßen konstanten Verlauf zeigen. Die maximale Höhe der Kurven 79, 80 hängt jedoch sehr kritisch von den gewählten Hauptrichtungen, d. h. von den Streuwinkeln $\vartheta_1$ und $\vartheta_2$ ab. Falls $\sin\vartheta_1 - \sin\vartheta_2$ einen »geeigneten« Wert annimmt, ergibt sich gemäß der Kurve 79 ein beträchtlicher Kontrast $|\mu|$ über einem breiten Bereich der Winkelabweichungen $\Delta\vartheta$. Weicht $\sin\vartheta_1 - \sin\vartheta_2$ nur geringfügig von diesem Wert ab, so ist gemäß der Kurve 80 praktisch kein Kontrast vorhanden.

Die »geeigneten« Werte von $\sin\vartheta_1 - \sin\vartheta_2$ sind durch die unverrauschten Beugungs- bzw. Streueigenschaften der Struktur 72 des Echtsheitsmusters bestimmt. Jedes Paar der Streueinrichtungen, in welchen die Struktur 72 eine Intensitätskonzentration des gestreuten Lichtes bewirkt, bestimmt einen solchen Wert. Bei einem periodischen Beugungsgitter sind z. B. solche geeignete Werte immer ganzzahlige Vielfache von $\lambda/b$, wobei $\lambda$ die Wellenlänge der Lichtquelle 73 und b die Gitterperiode bedeutet.

Aufgrund des beschriebenen Sachverhalts ergibt sich bei der normalen Überlagerung folgende bevorzugte Meßmethode. Zunächst werden die Hauptrichtungen auf geeignete Werte von $\vartheta_1$ und $\vartheta_2$ eingestellt. Im allgemeinen sind diese Richtungen nicht auf eine bestimmte Ebene beschränkt, aber der Einfachheit halber werden sie hier durch die Winkel $\vartheta_1$ und $\vartheta_2$ dargestellt. Falls die Hauptrichtungen so gewählt sind, daß die Differenz $\sin\vartheta_1 - \sin\vartheta_2$ den Eigenschaften des Echtheitsmusters angepaßt ist, so zeigt sich auf der Detektorebene eine breite Reihe deutlicher Interferenzstreifen, deren Intensitätsverlauf in der Fig. 27 durch eine Kurve 81 dargestellt ist und leicht detektiert werden kann. Ist die Differenz $\sin\vartheta_1 - \sin\vartheta_2$ jedoch falsch gewählt oder ist auf dem Dokument 71 überhaupt kein Echtheitsmerkmal vorhanden, so ergibt sich auf der Detektorebene gemäß der Kurve 82 der Fig. 27 lediglich eine diffuse Intensitätsverteilung.

Bei der inversen Überlagerung zeigen sich auf der Detektorebene, wie aus der Fig. 26 ersichtlich ist, im Vergleich zur normalen Überlagerung verhältnismäßig schmale, allenfalls sogar sehr schmale Reihen von Interferenzstreifen.

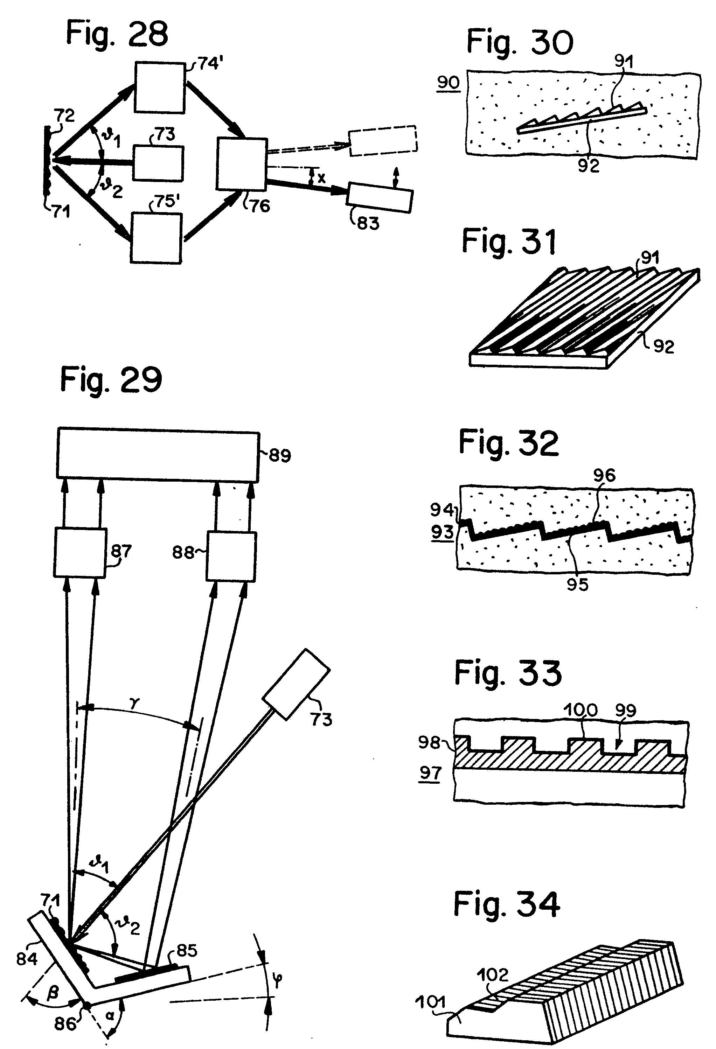

Insbesondere bei der normalen Überlagerung eignet sich die beschriebene Änderung der Intensität, d. h. die Anwesenheit von Interferenzstreifen auf der Detektorebene, vorteilhaft als Meßgröße zur Bildung des Ja-Signals bzw. Nein-Signals. Diese Änderung der Intensität stellt ebenfalls ein Maß für den Kohärenzgrad dar, kann aber meßtechnisch mit einfacheren Mitteln erfaßt werden als der eigentliche Kohärenzgrad. Gemäß der Fig. 28, in der gleiche Bezugszahlen wie in der Fig. 21 auf gleiche Teile hinweisen, kann die Änderung der Intensität auf der Detektorebene mit Hilfe eines einzigen Lichtfühlers 83 ermittelt werden, dessen Position entsprechend der Winkelabweichung $\Delta\vartheta$ (Fig. 21) um einen Betrag $\pm$ x verändert werden kann. Mittels des in der Fig. 28 nicht dargestellten Signalverarbeitungsgliedes kann zur Ja/Nein-Entscheidung die Änderung der Intensität mit gespeicherten Schwellwerten oder Schwellwertfunktionen verglichen werden. Anstelle eines bewegbaren Lichtfühlers kann auch eine Gruppe fest montierter Lichtfühler verwendet werden.

Eine besonders einfache Anordnung zur symmetrischen Abtastung ist in der Fig. 29 dargestellt. Das zu prüfende Dokument 71 ist auf einem ersten Schenkel einer winkelförmigen Halterung 84 angeordnet, deren zweiter Schenkel einen Spiegel 85 trägt. Die Lichtquelle 73 und die Halterung 84 mit dem Dokument 71 und dem Spiegel 85 sind auf einem nicht gezeichneten Gestell befestigt, das um eine Achse 86 schwenkbar ist. Eine zweite, fest montierte Gruppe von Elementen umfaßt zwei Winkelaussonderungsglieder 87, 88 und ein Detektorsystem 89. Das Detektorsystem 89 kann eine Korrelationsmeßeinrichtung z. B. gemäß der Fig. 3 oder eine interferometrische Meßeinrichtung z. B. gemäß der Fig. 11 enthalten.

Der Schwenkwinkel des Gestells ist in der Fig. 29 mit $\varphi$, der Außenwinkel zwischen der Ebene des Dokumentes 71 und der Ebene des Spiegels 85 mit $\alpha$ und der Winkel zwischen der Ebene des Dokumentes 71 und der Einfallsrichtung des Lichtstrahls mit $\beta$ bezeichnet. $\gamma$ bedeutet den Winkel zwischen dem ersten, unmittelbar auf das Winkelaussonderungsglied 87 fallenden Lichtbündel dem zweiten, am Spiegel 85 gespiegelten, auf das Winkelaussonderungsglied 88 fallenden Lichtbündel. Die mittleren Streuwinkel der beiden ausgesonderten Lichtbündel sind wiederum mit $\vartheta_1$ und $\vartheta_2$

7

bezeichnet.

Die beschriebene geometrische Anordnung bedingt, daß die ausgesonderten Streuwinkel $\vartheta_1$ und $\vartheta_2$ gegeben sind durch $\vartheta_1 = c + \varphi$ und $\vartheta_2 = c' - \varphi$, wobei c und c' Konstanten sind. Durch Schwenken des Gestells um den Winkel $\varphi$ können also die Winkel $\vartheta_1$ und $\vartheta_2$ gegenläufig verändert werden. Für die Summe der Winkel $\vartheta_1$ und $\vartheta_2$ gilt

$$\vartheta_1 + \vartheta_2 = \gamma + 2(\alpha + \beta - \pi).$$

Werden die Winkel $\alpha$, $\beta$ und $\gamma$ so gewählt, daß die rechte Seite der Gleichung null ist, so gilt $\vartheta_1 = -\vartheta_2$, d. h. es handelt sich um eine symmetrische Abtastung im engeren Sinne, wozu lediglich eine einzige mechanische Bewegung erforderlich ist.

Wird bei der Anordnung nach der Fig. 20 $\vartheta_2 = \vartheta_1$ gewählt, so kann eine symmetrische Abtastung auch dadurch erzielt werden, daß die Wellenlänge der Lichtquelle 73 variiert wird.

In der Fig. 30 ist ein Dokument 90 dargestellt, bei dem eine räumliche Struktur 91 auf einem schief in das Dokument eingebetteten Träger 92 angeordnet ist. Dadurch läßt sich die effektive Ebene der vorzugsweise mikroskopischen Struktur 91 verbergen und die Fälschungssicherheit weiter erhöhen. Die Struktur 91 kann zusätzlich noch besser getarnt werden, wenn das Dokument 90 aus einem diffus streuenden Material besteht, das eine stochastische Streukomponente bildet. Vorzugsweise ist die Struktur 91 auf dem Träger 92 gemäß der Fig. 31 schräg orientiert. Werden mehrere solche Träger 92 mit unterschiedlicher Orientierung in das Dokument 90 eingebettet, so ergibt sich gesamthaft eine Struktur, deren charakteristische Streu- bzw. Beugungsrichtungen nicht alle in einer Ebene liegen.

Das in der Fig. 32 dargestellte Dokument 93 enthält einen eingebetteten Träger 94 mit makroskopischer Sägezahnstruktur 95 und einer dieser überlagerten mikroskopischen Struktur 96. Die makroskopische Struktur 95 bewirkt eine Brechung oder Reflexion nach den Gesetzen der geometrischen Optik und die mikroskopische Struktur 96 eine charakteristische Beugung, wodurch wiederum erreicht wird, daß die charakteristischen Streu- bzw. Beugungsrichtungen nicht alle in einer Ebene liegen.

Die Fig. 33 zeigt ein Dokument 97 mit einem in dieses eingebetteten Träger 98, der eine mikroskopische Beugungsstruktur 99 aufweist und mit einer teildurchlässigen Reflexionsschicht 100 beschichtet ist. Die Reflexionsschicht 100 bildet einen Strahlenteiler, der einen schräg einfallenden Lichtstrahl in einen in der Reflexionsrichtung und einen in der Transmissionsrichtung liegenden Teilstrahl aufspaltet. Die Beugungsstruktur 99 sorgt dafür, daß die Strahlen noch weiter und in einer anderen Ebene geteilt werden. Soll der durch die Reflexionsschicht 100 und die Beugungsstruktur 99 gebildeten deterministischen Streukomponente eine stochastische Streukomponente überlagert werden, so läßt sich dies auf einfache Weise durch eine absichtlich erzeugte geometrische Unsauberkeit der Beugungsstruktur 99 erreichen.

In der Fig. 34 ist ein Sicherheitsfaden 101 dargestellt, der als Echtheitsmerkmal in ein Dokument eingebettet werden kann. Der makroskopische Querschnitt dieses Sicherheitsfadens 101 weist über mindestens eine vorgegebene Teillänge eine konstante, sich sowohl von einem Rechteck als auch von einem Kreis unterscheidende Form auf, während die Oberfläche eine mikroskopische Reliefstruktur 102 trägt. Die Kombination des makroskopischen Querschnitts mit der mikroskopischen Reliefstruktur 102 ergibt ein besonders schwer nachahmbares Echtheitsmerkmal, das sich durch eine Vielzahl charakteristischer Streurichtungen auszeichnet.

## Patentansprüche

1. Verfahren zur Verhinderung erfolgreicher Fälschungen von Dokumenten (1; 1'; 41; 50; 54; 56; 63; 66; 71; 90; 93; 97), bei dem mindestens ein Echtheitsmerkmal in Form einer räumlichen Struktur (2; 43; 72; 91; 95; 96; 99; 102) auf das Dokument aufgezeichnet wird und in einem selbsttätig arbeitenden Prüfgerät die Echtheit des Dokumentes dadurch geprüft wird, daß die Struktur mittels einer Lichtquelle (6; 73) beleuchtet wird, aus dem an der Struktur gestreuten Licht mindestens zwei enge Lichtbündel (10; 11 bzw. 45; 46 bzw. 61; 62) ausgesondert werden und mittels mindestens eines Lichtfühlers (18; 26 bis 29; 83) und eines elektronischen Signalverarbeitungsgliedes (19; 30; 77; 89) aus den beiden Lichtbündeln eine für die Struktur charakteristische Meßgröße ermittelt und mittels eines Entscheidungsgliedes (20; 31) aus der Meßgröße ein Ja-Signal bzw. ein Nein-Signal gebildet wird, dadurch gekennzeichnet, daß eine vom Kohärenzgrad der beiden Lichtbündel (10; 11 bzw. 45; 46 bzw. 61; 62) abhängige Größe ($|\mu|$; $g^{(2)}$) gemessen und diese als Meßgröße zur Bildung des Ja-Signals bzw. Nein-Signals benutzt wird.

2. Verfahren nach Anspruch 1, dadurch gekennzeichnet, daß die räumliche Struktur (2) durch Überlagerung einer deterministischen Komponente (2') und einer stochastischen diffus streuenden Komponente (2'') gebildet und die stochastische Komponente (2'') so gewählt wird, daß sie die Erkennung des Echtheitsmerkmals durch Intensitätsmessungen erschwert, jedoch die Erkennung durch Messung des Kohärenzgrades noch erlaubt.

3. Verfahren nach Anspruch 2, dadurch gekennzeichnet, daß die Korrelationslänge (l) der stochastischen Komponente (2'') höchstens $1/5$ der typischen Abmessungen (g) der deterministischen Kompo nente (2') beträgt.

4. Verfahren nach Anspruch 1, dadurch gekennzeichnet, daß die beiden Lichtbündel (10; 11 bzw. 45; 46 bzw. 61; 62) einander überlagert werden und der Kontrast ($| \mu |$) der dabei entstehenden Interferenzstreifen gemessen und als Meßgröße zur Bildung des Ja-Signals bzw. Nein-Signals benutzt wird.

5. Verfahren nach Anspruch 1, dadurch gekennzeichnet, daß die Intensitätskorrelation ($g^{(2)}$) der beiden Lichtbündel (10; 11 bzw. 45; 46 bzw. 61; 62) gemessen und als Meßgröße zur Bildung des Ja-Signals bzw. Nein-Signals benutzt wird.

6. Verfahren nach einem der Ansprüche 1 bis 5, dadurch gekennzeichnet, daß die räumliche Struktur (43) aus einem makroskopischen optischen Element (43'; 51; 55; 59; 65; 67) und einem Streuelement (43'') gebildet wird, wobei auf die räumliche Struktur (43) einfallendes Licht (44; 60) durch das makroskopische optische Element (43'; 51; 55; 59; 65; 67) nach Gesetzen der geometrischen Optik durch Brechung oder Reflexion in mindestens zwei vorbestimmte Richtungen (45; 46; 61; 62) gelenkt und durch das Streuelement (43'') derart diffus gestreut wird, daß ein Nachweis des makroskopischen optischen Elementes anhand des Intensitätsmusters (47) des gestreuten Lichtes erschwert wird, das gestreute Licht in den vorbestimmten Richtungen (45; 46; 61; 62) aber noch gegenseitig kohärent ist.

7. Verfahren nach Anspruch 6, dadurch gekennzeichnet, daß als makroskopisches optisches Element (43') ein Band (51; 55) in den Träger (42) eingebettet wird, bei dem mindestens die eine Oberfläche aus mindestens zwei zueinander geneigten Teilflächen (52; 53) besteht.

8. Verfahren nach Anspruch 7, dadurch gekennzeichnet, daß ein Band (55) mit rechteckförmigem Querschnitt entlang einer Linie geknickt und in den Träger (42) eingebettet wird.

9. Verfahren nach Anspruch 6, dadurch gekennzeichnet, daß als makroskopisches optisches Element (43') ein Strahlenteiler (59; 65) in den Träger (42; 57; 58) eingebettet wird.

10. Verfahren nach Anspruch 9, dadurch gekennzeichnet, daß der Strahlenteiler (59) durch die rauhe Trennfläche zweier Schichten (57; 58) des Trägers gebildet wird.

11. Verfahren nach Anspruch 9, dadurch gekennzeichnet, daß als Strahlenteiler (65) eine teildurchlässige Reflexionsschicht (65) auf einem transparenten Band (64) angeordnet und dieses in den Träger (42) eingebettet wird.

12. Verfahren nach Anspruch 6, dadurch gekennzeichnet, daß als makroskopisches optisches Element (43') ein Körper (67) mit einer Vielzahl geneigter Teilflächen (68) in den Träger (42) eingebettet wird.

13. Verfahren nach einem der Ansprüche 6 bis 12, dadurch gekennzeichnet, daß das Streuelement (43'') durch das Material und/oder die Oberflächenstruktur des Trägers (42) gebildet wird.

14. Verfahren nach einem der Ansprüche 6 bis 12, dadurch gekennzeichnet, daß das Streuelement (43'') durch das Material und/oder die Oberflächenstruktur des makroskopischen optischen Elementes (43'; 51; 55; 59; 65; 67) gebildet wird.

15. Verfahren nach Anspruch 7 oder 12, dadurch gekennzeichnet, daß das makroskopische optische Element (51; 67) aus einem transparenten Material besteht.

16. Verfahren nach einem der Ansprüche 7, 8 oder 12, dadurch gekennzeichnet, daß das makroskopische optische Element (51; 55; 67) aus Metall oder aus einem metallbeschichteten Material besteht.

17. Verfahren nach einem der Ansprüche 6 bis 16, dadurch gekennzeichnet, daß die vorbestimmten Richtungen, in denen das gestreute Licht gegenseitig kohärent ist, in einem oder mehreren Codemustern angeordnet werden.

18. Verfahren nach Anspruch 1, dadurch gekennzeichnet, daß die beiden ausgesonderten Lichtbündel einander überlagert und auf eine Detektorebene gelenkt werden und daß die Änderung der Lichtintensität auf der Detektorebene als Meßgröße zur Bildung des Ja-Signals bzw. Nein-Signals benutzt wird.

19. Verfahren nach Anspruch 18, dadurch gekennzeichnet, daß mittels des Lichtfühlers (83) bzw. der Lichtfühler die Anwesenheit von Interferenzstreifen auf der Detektorebene festgestellt wird.

20. Verfahren nach Anspruch 1 oder 6, dadurch gekennzeichnet, daß die räumliche Struktur (91) auf einem Träger (92) angeordnet und der Träger (92) schief in das Dokument (90) eingebettet wird.

21. Verfahren nach Anspruch 20, dadurch gekennzeichnet, daß die Struktur (91) auf dem Träger (92) schräg orientiert ist.

22. Verfahren nach Anspruch 1 oder 6, dadurch gekennzeichnet, daß die räumliche Struktur durch Überlagerung einer makroskopischen Struktur (95; 100) und einer mikroskopischen Struktur (96; 99) gebildet wird.

23. Verfahren nach Anspruch 1 oder 6, dadurch gekennzeichnet, daß der räumlichen Struktur (99) eine teildurchlässige Reflexionsschicht (100) überlagert wird.

24. Verfahren nach Anspruch 1 oder 6, dadurch gekennzeichnet, daß in das Dokument ein Sicherheitsfaden (101) eingebettet wird, dessen makroskopischer Querschnitt eine vorbestimmte, über eine vorgegebene Länge konstante, sich sowohl von einem Rechteck als auch von einem Kreis unterscheidende Form aufweist und dessen Oberfläche eine mikroskopische Reliefstruktur (102) aufweist.

25. Verfahren nach einem der Ansprüche 1 bis 6, dadurch gekennzeichnet, daß bei der Messung der vom Kohärenzgrad der beiden Lichtbündel (10; 11 bzw. 45; 46 bzw. 61; 62) abhängigen Größe ($| \mu |$; $g^{(2)}$) Mittelwerte gebildet werden.

26. Verfahren nach Anspruch 25, dadurch gekennzeichnet, daß Mittelwerte über das gestreute Lichtmuster gebildet werden.

27. Anordnung zur Durchführung des Verfahrens nach Anspruch 1, mit einem Dokument (1; 1'; 41; 50; 54; 56; 63; 66; 71; 90; 93; 97), auf das mindestens ein Echtheitsmerkmal in Form einer räumlichen Struktur (2; 43; 72; 91; 95; 96; 99; 102) aufgezeichnet ist, und mit einem selbsttätig arbeitenden Prüfgerät zur Prüfung der Echtheit des Dokumentes (1; 1'; 41; 50; 54; 56; 63; 66; 71; 90; 93; 97) welches Prüfgerät eine Lichtquelle (6; 73) zur Beleuchtung der Struktur (2; 43; 72; 91; 95; 96; 99; 102), mindestens zwei Winkelaussonderungsglieder (8; 9; 74; 75; 87; 88) zum Aussondern je eines engen Lichtbündels (10; 11 bzw. 45; 46 bzw. 61; 62) aus dem an der Struktur (2; 43; 72; 91; 95; 96; 99; 102) gestreuten Licht, mindestens einen Lichtfühler (18; 26; bis 29; 83) und ein elektronisches Signalverarbeitungsglied (19; 30; 77; 89) zur Ermittlung einer für die Struktur (2; 43; 72; 91; 95; 96; 99; 102) charakteristischen Meßgröße und ein Entscheidungsglied (20; 31) zur Bildung eines Ja-Signals bzw. Nein-Signals aufweist, dadurch gekennzeichnet, daß das Signalverarbeitungsglied (19; 30; 77; 89) zur Ermittlung einer vom Kohärenzgrad der beiden Lichtbündel (10; 11 bzw. 45; 46 bzw. 61; 62) abhängigen Meßgröße ausgebildet ist.

28. Anordnung nach Anspruch 27, dadurch gekennzeichnet, daß die Struktur (2; 43) eine deterministische Komponente (2'; 43') und eine stochastische, diffus streuende Komponente (2''; 43'') aufweist und daß die Korrelationslänge (I) der stochastischen Komponente (2''; 43'') höchstens $1/5$ der typischen Abmessungen (g) der deterministischen Komponente (2'; 43') beträgt.

29. Anordnung nach Anspruch 28, gekennzeichnet durch ein Überlagerungsglied (17; 23; 24) zur Überlagerung der beiden Lichtbündel (10; 11 bzw. 45; 46 bzw. 61; 62).

30. Anordnung nach Anspruch 29, gekennzeichnet durch ein Wegdifferenzglied (13) zur Erzeugung einer veränderbaren optischen Wegdifferenz der beiden Lichtbündel (10; 11 bzw. 45; 46 bzw. 61; 62).

31. Anordnung nach Anspruch 29, dadurch gekennzeichnet, daß das Dokument (1; 1'; 41; 50; 54; 56; 63; 66; 71; 90; 93; 97) auf einer schwenkbaren Halterung angeordnet ist und daß das Entscheidungsglied (20) so ausgebildet ist, daß es ein Ja-Signal nur dann abgibt, wenn die Änderung des Kontrastes ($|\mu|$) der auf einer Detektorebene (25) erscheinenden Interferenzstreifen beim Schwenken des Dokumentes (1; 1'; 41; 50; 54; 56; 63; 66; 71; 90; 93; 97) einen vorgegebenen Wert überschreitet.

32. Anordnung nach Anspruch 28, dadurch gekennzeichnet, daß das Signalverarbeitungsglied (30) einen elektronischen Korrelator aufweist.

33. Anordnung nach einem der Ansprüche 28 bis 32, dadurch gekennzeichnet, daß der mittlere Streuwinkel ($\vartheta$; $\vartheta'$) der ausgesonderten Lichtbündel (10; 11) betriebsmäßig veränderbar ist und daß das Entscheidungsglied (20; 31) zum Vergleich der Meßgröße ($|\mu|$; $g^{(2)}$) mit einer gespeicherten Schwellwertfunktion eingerichtet ist.

34. Anordnung nach Anspruch 27, dadurch gekennzeichnet, daß ein Überlagerungsglied (76) zur Überlagerung der beiden Lichtbündel vorgesehen ist und daß das Signalverarbeitungsglied (77; 89) zur Feststellung der Änderung der Lichtintensität der auf eine Detektorebene fallenden überlagerten Lichtbündel eingerichtet ist.

35. Anordnung nach Anspruch 34, dadurch gekennzeichnet, daß die Anzahl der Bildumkehrungen gerade ist.

36. Anordnung nach Anspruch 27 oder 34, dadurch gekennzeichnet, daß das Dokument (71; 90; 93; 97), die Lichtquelle (73) und ein das eine der beiden Lichtbündel umlenkender Spiegel (85) auf einem schwenkbaren Gestell angeordnet sind.

37. Anordnung nach einem der Ansprüche 27 bis 36, dadurch gekennzeichnet, daß die Wellenlänge der Lichtquelle (73) veränderbar ist.

## Claims

1. A method of preventing successful forgeries of documents (1; 1'; 41; 50; 54; 56; 63; 66; 71; 90; 93; 97) wherein at least one authenticity feature in the form of a three-dimensional structure (2; 43; 72; 91; 95; 96; 99; 102) is recorded on the document and the authenticity of the document is tested in an independently operating testing device in that the structure is illuminated by means of a light source (6; 73), two narrow light beams (10; 11; 45; 46 and 61; 62 respectively) are separated out of the light scattered at the structure, and a measurement parameter which is characteristic in respect of the structure is determined from the two light beams by means of at least one light sensor (18; 26 to 29; 83) and an electronic signal processing member (19; 30; 77; 88) and a yes signal or a no signal is formed from the measurement parameter by means of a decision means (20; 31), characterised in that a parameter ($|\mu|$; $g^{(2)}$) which is dependent on the degree of coherence of the two light beams (10; 11; 45; 46; 61; 62) is measured and said parameter is used as the measurement parameter for forming the yes signal ot the no signal.

2. A method according to claim 1 characterised in that said structure (2) is formed by superimposition of a deterministic component (2') and a stochastic component (2'') with a diffuse scatter action, and the stochastic component (2'') is so selected that it makes it difficult to recognise the authenticity feature by intensity measurement operation but still permits recognition of the authenticity feature by measurement of the degree of coherence.

3. A method according to claim 2 characterised in that the correlation length (l) of the stochastic component (2″) is at most $^1/_5$ of the typical dimensions (g) of the deterministic component (2′).

4. A method according to claim 1 characterised in that the two light beams (10;11; 45; 46; 61; 62) are superimposed on each other and the contrast )| μ |) of the resulting interference bands is measured and used as the measurement parameter for forming the yes signal or the no signal.

5. A method according to claim 1 characterised in that the intensity correlation (g$^{(2)}$) of the two light beams (10; 11; 45; 46; 61; 62) is measured and used as a measurement parameter for forming the yes signal or the no signal.

6. A method according to one of claims 1 to 5 characterised in that the three-dimensional structure (43) comprises a macroscopic optical element (43′; 51; 55; 59; 65; 67) and a scatter element (43″), wherein light (44; 60) impinging on the structure (43) is deflected by the macroscopic optical element (43′; 51; 55; 59; 65; 67) in accordance with the laws of geometrical optics by refraction or reflection in at least two predetermined directions (45; 46; 61; 62) and diffusely scattered by the scatter element (43″) in such a way that detection of the macroscopic optical element by reference to the intensity pattern (47) of the scattered light is made difficult, but the scattered light is still mutually coherent in said predetermined directions (45; 46; 61; 62).

7. A method according to claim 6 characterised in that the macroscopic optical element (43′) is a strip (51; 55) which is embedded into the carrier (42), wherein at least the one surface comprises at least two surface portions (52; 53) which are inclined relative to each other.

8. A method according to claim 7 characterised in that a strip (55) of rectangular cross-section is bent along a line and embedded into the carrier (42).

9. A method according to claim 6 characterised in that the macroscopic optical element (43′) is a beam splitter (59; 65) which is embedded into the carrier (42; 57; 58).

10. A method according to claim 9 characterised in that the beam splitter (59) is formed by the rough interface of double layers (57; 58) of the carrier.

11. A method according to claim 9 characterised in that a partially translucent reflection layer (65) is arranged on a transparent strip (64), as the beam splitter (65), and said strip (64) is embedded in the carrier (42).

12. A method according to claim 6 characterised in that the macroscopic optical element (43′) is a member (67) having a plurality of inclined surface portions (68), which is embedded in the carrier (42).

13. A method according to one of claims 6 to 12 characterised in that the scatter element (43″) is formed by the material and/or the surface structure of the carrier (42).

14. A method according to one of claims 6 to 12 characterised in that the scatter element (43″) is formed by the material and/or the surface structure of the macroscopic optical element (43′; 51; 55; 59; 65; 67).

15. A method according to claim 7 or claim 12 characterised in that the macroscopic optical element (51; 67) comprises a transparent material.

16. A method according to one of claims 7, 8 or 12 characterised in that the macroscopic optical element (51; 55; 67) comprises metal or a metal-coated material.

17. A method according to one of claims 6 to 16 characterised in that the predetermined directions in which the scattered light is mutually coherent are arranged in one or more code patterns.

18. A method according to claim 1 characterised in that the two separated light beams are superimposed on each other and deflected on to a detector plane and that the change in the intensity of light on the detector plane is used as a measurement parameter for forming the yes signal or no signal.

19. A method according to claim 18 characterised in that the presence of interference bands on the detector plane is established by means of the light sensor (83) or sensors.

20. A method according to claim 1 or claim 6 characterised in that the three-dimension structure (91) is arranged on a carrier (92) and the carrier (92) is embedded into the document (90) in an sloping position.

21. A method according to claim 20 characterised in that the structure (91) is inclinedly oriented on the carrier (92).

22. A method according to claim 1 or claim 6 characterised in that the three-dimensional structure is formed by the superimposition of a macroscopic structure (95; 100) and a microscopic structure (96; 99).

23. A method according to claim 1 or claim 6 characterised in that the three-dimensional structure (99) has a partially translucent reflection layer (100) superimposed thereon.

24. A method according to claim 1 or claim 6 characterised in that a security thread (101) is embedded into the document, the macroscopic cross-section of said thread being of a predetermined form which is constant over a predetermined length and which differs both from a square or rectangle and from a circle, the surface of the thread having a microscopic relief structure (102).

25. A method according to one of claims 1 to 6 characterised in that mean values are formed when measuring the parameter (| μ |; g$^{(2)}$) which is dependent on the degree of coherence of the two light beams (10; 11; 45; 46; 61; 62).

26. A method according to claim 25 characterised in that mean values are formed by way of the scattered light pattern.

27. An arrangement for carrying out the method according to claim 1, with a document (1; 1'; 41; 50; 54; 56; 63; 66; 71; 90; 93; 97), on which at least one authenticity feature is recorded in the form of a three-dimensional structure (2; 43; 72; 91; 95; 96; 99; 102), and with an automatically operating testing device for testing the authenticity of a document (1; 1'; 41; 50; 54; 56; 63; 66; 71; 90; 93; 97) which testing device comprises a light source (6; 73) for lighting the structure (2; 43; 72; 91; 95; 96; 99; 102), at least two angle separation members 8; 9; 74; 75; 87; 88) for separating a respective narrow light beam (10, 11; 45, 46; 61, 62 respectively) out of the light which is scattered at the structure (2; 43; 72; 91; 95; 96; 99; 102), at least one light sensor (18; 26 to 29; 83) and an electronic signal processing means (19; 30; 77; 89) for determining a measurement parameter which is characteristic in respect of the structure (2; 43; 72; 91; 95; 96; 99; 102), and a decision means (20; 31) for forming a yes signal or a no signal, characterised in that the signal processing means (19; 30; 77; 89) is designed to detect a measurement parameter which is dependent on the degree of coherence of the two light beams (10, 11; 45, 46; 61, 62).

28. An arrangement according to claim 27 characterised in that the structure (2; 43) has a deterministic component (2'; 43') and a stochastic component (2''; 43'') with a diffuse scattering action, and that the correlation length (I) od the stochastic component (2''; 43'') is at most $^1/_5$ of the typical dimensions (g) of the deterministic component (2'; 43').

29. An arrangement according to claim 28 characterised by a superimposition means (17; 23; 24) for superimposing the two light beams (10, 11; 45, 46; 61, 62 respetively).

30. An arrangement according to claim 29 characterised by a travel difference means (13) for producing a variable optical travel difference in respect of the two light beams (10, 11; 45, 46; 61, 62).

31. An arrangement according to claim 29 characterised in that the document (1; 1'; 41; 50; 54; 56; 63; 66; 71; 90; 93; 97) is arranged on a pivotal holder and that the decision means (20) is such that it outputs a yes signal only when the change in the contrast ($|\mu|$) of the interference bands appearing on a detector plane (25), upon pivotal movement of the document (1; 1'; 41; 50; 54; 56; 63; 66; 71; 90; 93; 97), exceeds a predetermined value.

32. An arrangement according to claim 28 characterised in that the signal processing means (30) has an electronic correlator.

33. An arrangement according to one of claims 28 to 32 characterised in that the mean scatter angle ($\vartheta$; $\vartheta'$) of the separated light beams (10, 11) is variable in operation and that the decision means (20; 31) is arranged to compare the measurement parameter ($|\mu|$; $g^{(2)}$) with a stored threshold function.

34. An arrangement according to claim 27 characterised in that there is provided a superimposition means (76) for superimposing the two light beams and that the signal processing means (77; 89) is arranged to detect the change in the intensity of the light of the superimposed light beams falling on a detector plane.

35. An arrangement according to claim 34 characterised in that the number of image reversals is even.

36. An arrangement according to claim 27 or claim 34 characterised in that the document (71; 90; 93; 97), the light source (73) and a mirror (85) for deflecting one of the two light beams are arranged on a pivotal frame.

37. An arrangement according to one of claims 27 to 36 characterised in that the wavelength of the light source (73) is variable.

## Revendications

1. Procédé pour empêcher des falsifications réussies de documents (1; 1'; 41; 50; 54; 56; 63; 66; 71; 90; 93; 97), dans lequel au moins une caractéristique d'authenticité se présentant sous la forme d'une structure spatiale (2; 43; 72; 91; 95; 96; 99; 102) est enregistrée sur le document et, dans un appareil de contrôle opérant automatiquement, l'authenticité du document est contrôlée par le fait que la structure est éclairée au moyen d'une source lumineuse (6; 73), au moins deux faisceaux lumineux étroits (10; 11 ou 45; 46 ou 61; 62) sont séparés de la lumière dispersée sur la structure et à l'aide d'au moins un capteur de lumière (18; 26 à 29; 83) et d'un organe de traitement électronique de signaux (19; 30; 77; 89) on détermine à partir des deux faisceaux lumineux une grandeur de mesure caractéristique pour la structure et on produit au moyen d'un organe de décision (20; 31) à partir de la grandeur de mesure un signal »oui« ou un signal »non«, caractérisé en ce qu'une grandeur ($|\mu|$; $g^{(2)}$), fonction du degré de cohérence des deux faisceaux lumineux (10; 11 ou 45; 46 ou 61; 62) est mesurée et est utilisée comme grandeur de mesure pour la production du signal »oui« ou du signal »non«.

2. Procédé selon la revendication 1, caractérisé en ce que la structure spatiale (2) est constituée par superposition d'une composante déterminante (2') et d'une composante stochastique de dispersion diffuse (2'') et la composante stochastique (2'') est choisie de manière qu'elle rende difficile la détection de la caractéristique d'authenticité par des mesures d'intensité en permettant encore cependant la détection par une mesure du degré de cohérence.

3. Procédé selon la revendication 2, caractérisé en ce que la longueur de corrélation (I) de la composante stochastique (2'') s'élève au maximum à $^1/_5$ des dimensions typiques (g) de la compo

**0 057 271**

sante déterminante (2').

4. Procédé selon la revendication 1, caractérisé en ce que les deux faisceaux lumineux (10; 11 ou 45; 46 ou 61; 62) sont superposés mutuellement et en ce que le contraste ($|\mu|$) des bandes d'interférence ainsi obtenues est mesuré et est utilisé comme grandeur de mesure pour produire le signal »oui« ou le signal »non«.

5. Procédé selon la revendication 1, caractérisé en ce que la corrélation d'intensité ($g^{(2)}$) des deux faisceaux lumineux (10; 11 ou 45; 46 ou 61; 62) est mesurée et est utilisée comme grandeur de mesure pour la production du signal »oui« ou du signal »non«.

6. Procédé selon und des revendications 1 à 5, caractérisé en ce que la structure spatiale (43) est constituée d'un élément optique macroscopique (43'; 51; 55; 59; 65; 67) et d'un élément de dispersion (43''), la lumière (44; 60) arrivant sur la structure spatiale (43) étant déviée par l'élément optique macroscopique (43'; 51; 55; 59; 65; 67) conformément aux lois de l'optique géométrique par réfraction ou réflexion dans au moins deux directions prédéterminées (45; 46; 61; 62) et étant dispersée de façon diffuse par l'élément de dispersion (43'') de manière qu'on contrôle de l'élément optique macroscopique au moyen du modèle d'intensité (47) de la lumière dispersée soit rendu difficile tandis que la lumière dispersée dans les directions prédéterminées (45; 46; 61; 62) reste cependant encore au contraire cohérente.

7. Procédé selon la revendication 6, caractérisé en ce que, comme élément optique macroscopique (43'), une bande (51; 55) est noyée dans le support (42), dont au moins une surface se compose d'au moins deux surfaces partielles inclinées relativement (52; 53).

8. Procédé selon la revendication 7, caractérisé en ce qu'une bande (55) de section rectangulaire est pliée le long d'une ligne et est noyée dans le support (42).

9. Procédé selon la revendication 6, caractérisé en ce que, comme élément optique macroscopique (43'), un diviseur de rayon (59; 65) est noyé dans le support (42; 57; 58).

10. Procédé selon la revendication 9, caractérisé en ce que le diviseur de rayon (59) est constitué par la surface séparatrice rugueuse de deux couches (57; 58) du support.

11. Procédé selon la revendication 9, caractérisé en ce que, comme diviseur de rayon (65), une couche réfléchissante partiellement transparente (65) est disposée sur une bande transparente (64) et celle-ci est noyée dans le support (42).

12. Procédé selon la revendication 6, caractérisé en ce que, comme élément optique macroscopique (43'), un corps (67) pourvu d'un grand nombre de surfaces partielles inclinées (68), est noyé dans le support (42).

13. Procédé selon l'une des revendications 6 à 12, caractérisé en ce que l'élément de dispersion (43'') est constitué par la matière et/ou la structure superficielle du support (42).

14. Procédé selon l'une des revendications 6 à 12, caractérisé en ce que l'élément de dispersion (43'') est constitué par la matière et/ou la structure superficielle de l'élément optique macroscopique (43'; 51; 55; 59; 65; 67).

15. Procédé selon la revendication 7 ou 12, caractérisé en ce que l'élément optique macroscopique (51; 67) se compose d'une matière transparente.

16. Procédé selon l'une des revendications 7, 8 ou 12, caractérisé en ce que l'élément optique macroscopique (51; 55; 67) se compose d'un métal ou d'une matière revêtue d'un métal.

17. Procédé selon l'une des revendications 6 à 16, caractérisé en ce que les directions prédéterminées dans lesquelles la lumière dispersée est au contraire cohérente, sont disposées dans un ou plusieurs modèles codés.

18. Procédé selon la revendication 1, caractérisé en ce que les deux faisceaux lumineux séparés sont superposés mutuellement et sont déviés dans un plan détecteur et en ce que la variation d'intensité lumineuse dans le pla détecteur est utilisée comme grandeur de mesure pour produire le signal »oui« ou le signal »non«.

19. Procédé selon la revendication 18, caractérisé en ce que la présence de bandes d'interférence sur le plan détecteur est établie au moyen du capteur de lumière (83) ou de capteurs de lumière.

20. Procédé selon la revendication 1 ou 6, caractérisé en ce que la structure spatiale (91) est disposée sur un support (92) et le support (92) est noyé en oblique dans le document.

21. Procédé selon la revendication 20, caractérisé en ce que la structure (91) est orientée en oblique sur le support (92).

22. Procédé selon la revendication 1 ou 6, caractérisé en ce que la structure spatiale est formée par superposition d'une structure macroscopique (95; 100) et d'une structure microscopique (96; 99).

23. Procédé selon la revendication 1 ou 6, caractérisé en ce que la structure spatiale (99) est superposée à une couche réfléchissante partiellement transparente (100).

24. Procédé selon la revendication 1 ou 6, caractérisé en ce que dans le document est noyé un fil de sécurité (101) dont la section macroscopique présente une forme prédéterminée, constante sur une longueur prédéfinie, se différenciant aussi bien d'un rectangle qu'également d'un cercle et dont la surface comporte une structure de relief microscopique (102).

25. Procédé selon l'une des revendications 1 à 6, caractérisé en ce que des valeurs moyennes sont établies lors de la mesure de la grandeur ($|\mu|$; $g^{(2)}$) fonction du degré de cohérence des deux faisceaux lumineux (10; 11 ou 45; 46 ou 61; 62).

13

26. Procédé selon la revendication 25, caractérisé en ce que des valeurs moyennes sont établies pour le modèle lumineux dispersé.

27. Dispositif pour la mise en oeuvre du procédé selon la revendication 1, comportant un document (1; 1'; 41; 50; 54; 56; 63; 66; 71; 90; 93; 97), sur lequel au moins une caractéristique d'authenticité est enregistrée sous la forme d'une structure spatiale (2; 43; 72; 91; 95; 96; 99; 102), et un appareil de contrôle opérant automatiquement pour le contrôle de l'authenticité du document (1; 1'; 41; 50; 54; 56; 63; 66; 71; 90; 93; 97), cet appareil de contrôle comportant une source lumineuse (6; 73) pour éclairer la structure (2; 43; 72; 91; 95; 96; 99; 102), au moins deux organes de séparation angulaire (8; 9; 74; 75; 87; 88) pour séparer un faisceau lumineux étroit (10; 11 ou 45; 46 ou 61; 62) à partir de la lumière dispersée sur la structure (2; 43; 72; 91; 95; 96; 99; 102), au moins un capteur de lumière (18; 26 à 29; 83) et un organe de traitement électronique de signaux (19; 30; 77; 89) pour déterminer une grandeur de mesure caractéristique de la structure (2; 43; 72; 91; 95; 96; 99; 102) et un organe de décision (20; 31) pour produire un signal »oui« ou un signal »non«, caractérisé en ce que l'organe de traitement de signaux (19; 30; 77; 89) est agencé de manière à déterminer une grandeur de mesure fonction du degré de cohérence des deux faisceaux lumineux (10; 11 ou 45; 46 ou 61; 62).

28. Dispositif selon la revendication 27, caractérisé en ce que la structure (2; 43) comporte une composante déterminante (2'; 43') et une composante stochastique de dispersion diffuse (2''; 43'') et en ce que la longueur de corrélation (I) de la composante stochastique (2''; 43'') s'élève au maximum à $1/_5$ des dimensions typiques (g) de la composante déterminante (2'; 43').

29. Dispositif selon la revendication 28, caractérisé par un organe de superposition (17; 23; 24) pour la superposition des deux faisceaux lumineux (10; 11 ou 45; 46 ou 61; 62).

30. Dispositif selon la revendication 29, caractérisé par un organe d'établissement de différence de parcours (13) pour produire une différence de parcours optique modifiable des deux faisceaux lumineux (10; 11 ou 45; 46 ou 61; 62).

31. Dispositif selon la revendication 29, caractérisé en ce que le document (1; 1'; 41; 50; 54; 56; 63; 66; 71; 90; 93; 97) est placé sur un support pivotant et en ce que l'organe de décision (20) est agencé de manière à produire un signal »oui« seulement lorsque la variation du contraste ($|\mu|$) des bandes d'interférence apparaissant dans le plan détecteur (25) dépasse une valeur prédéterminée lors du pivotement du document (1; 1'; 41; 50; 54; 56; 63; 66; 71; 90; 93; 97).

32. Dispositiv selon la revendication 28, caractérisé en ce que l'organe de traitement de signaux (30) comporte un corrélateur électronique.

33. Dispositif selon l'une des revendications 28 à 32, caractérisé en ce que l'angle moyen de dispersion ($\vartheta$; $\vartheta'$) du faisceau lumineux séparé (10; 11) est modifiable fonctionnellement et en ce que l'organe de décision (20; 31) est agencé de manière à comparer la grandeur de mesure ($|\mu|$; $g^{(2)}$) avec une fonction de valeur de seuil mémorisée.

34. Dispositif selon la revendication 27, caractérisé en ce qu'un organe de superposition (76) est prévu pour une superposition des deux faisceaux lumineux et en ce que l'organe de traitement de signaux (77; 89) est agencé pour établir la modification d'intensité lumineuse des faisceaux lumineux superposés arrivant sur un plan détecteur.

35. Dispositif selon la revendication 34, caractérisé en ce que le nombre des inversions d'image est pair.

36. Dispositif selon la revendication 27 ou 34, caractérisé en ce que le document (71; 90; 93; 97), la source lumineuse (73) et un miroir (85) déviant un des deux faisceaux lumineux sont disposés sur un châssis pivotant.

37. Dispositif selon l'une des revendications 27 à 36, caractérisé en ce que la longuer d'onde de la source lumineuse (73) est modifiable.

0 057 271

Fig. 1

Fig. 2

Fig. 3

Fig. 4

15

Fig. 5a

Fig. 6a

Fig. 5b

Fig. 6b

Fig. 5c

Fig. 6c

Fig. 5d

Fig. 6d

Fig. 5e

Fig. 6e

Fig. 7

Fig. 8

Fig. 9

Fig. 10

## Fig. 11

## Fig. 12

# Fig. 13

# Fig. 14

# Fig. 15

# Fig. 16

# Fig. 17

# Fig. 18

# Fig. 19

**Fig. 20**

**Fig. 21**

**Fig. 22**

**Fig. 23**

**Fig. 24**

**Fig. 25**

**Fig. 26**

**Fig. 27**

## Fig. 28

## Fig. 29

## Fig. 30

## Fig. 31

## Fig. 32

## Fig. 33

## Fig. 34